# EUROPEAN PATENT SPECIFICATION

(11) **EP 3 315 467 B1**
(45) Date of publication and mention of the grant of the patent: **28.10.2020**
(21) Application number: 16814680.1
(22) Date of filing: 22.06.2016
(51) Int. Cl.: C03B 23/035

(54) **SUBSTRATE VACUUM FORMING MOLD AND METHOD**
FORM UND VERFAHREN ZUR SUBSTRATVAKUUMFORMUNG
MOULE ET PROCÉDÉ DE FORMAGE SOUS VIDE D'UN SUBSTRAT

(30) Priority: 23.06.2015 KR 20150089151
(43) Date of publication of application: 02.05.2018
(73) Proprietor: Corning Precision Materials Co., Ltd., Asan-si, Chungcheongnam-do 31452 (KR)
(72) Inventor: JEE, Hong Keun, Asan-si Chungcheongnam-do 31452 (KR); CHAE, Kyu Bong, Asan-si Chungcheongnam-do 31452 (KR)
(74) Representative: Elkington and Fife LLP
(86) International application number: PCT/KR2016/006629
(87) International publication number: WO 2016/208967

(56) References cited:
- WO-A1-2012/118612
- WO-A1-2015/095093
- JP-A- S61 222 933
- KR-A- 20120 092 687
- KR-A- 20140 111 403
- KR-A- 20140 111 403
- KR-A- 20140 115 737
- KR-B1- 101 206 328
- KR-B1- 101 361 854
- US-A- 3 825 742
- US-A1- 2014 234 581

## Description

### BACKGROUND

### Field

The present disclosure relates to a vacuum forming mold and method for molding substrates. More particularly, the present disclosure relates to a vacuum forming mold and method for molding substrates, able to form multi-blend curvatures without leaving a vacuum hole mark on the surface of the substrate.

### Description of Related Art

A substrate, for example, a glass substrate is fabricated into a three-dimensional (3D) shape generally using a vacuum, pressurization, pressing, rolling, or the like.

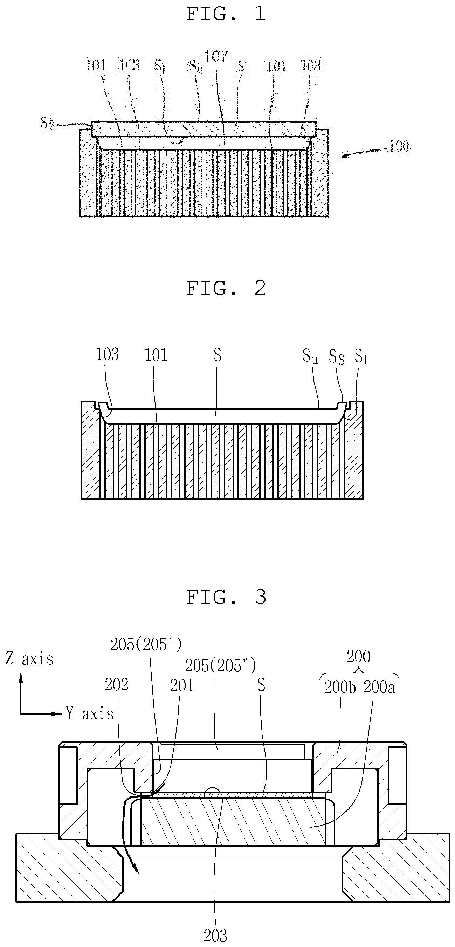

FIG. 1 and FIG. 2 schematically illustrate a vacuum forming method for substrates of the related art.

As illustrated in FIG. 1, vacuum holes 101 are provided in the bottom surface 103 of a cavity 107 of a mold 100. According to the 3D shape of a substrate S, slots may be provided in the bottom surface 103 to substitute for the vacuum holes 101. The The cavity 107 (section for forming a display area) may be recessed perpendicularly below the substrate S having a preset thickness. The cavity 107 allows a vacuum pressure to be applied to the substrate S through the plurality of vacuum holes 101, such that the substrate S can be formed into an intended 3D shape.

Regarding a molding method, the substrate S is seated on top of the mold 100. Afterwards, the substrate S is softened by heating the substrate S to a proper temperature. Thereafter, a vacuum pressure is perpendicularly applied to the bottom surface Sl of the substrate S from the bottom surface 103 of the mold 100 using a vacuum line of vacuum equipment. The pressure and the flowing rate of the vacuum are controlled using the size, length, and number of the holes 101 and the distribution of the holes 101 by sucking air through the holes 101 perpendicular to the substrate S. When the vacuum is applied into the cavity 107, the bottom surface Sl of the softened substrate S is brought into contact with the bottom surface 103 of the cavity 107 by the vacuum.

However, in the vacuum forming method of the related art, it is impossible to avoid marks on the bottom surface Sl of the substrate S transferred from the shape of the holes. The part of the substrate S brought into contact with the bottom surface 103 of the cavity 107 is a very important quality area since it will form a display area when the substrate is assembled into a final product. The hole marks decisively lower the price of the product since they are visible. Additional processing, i.e. polishing, is required in order to remove the hole marks or slot marks. However, this process not only increases fabrication costs, but also causes a significant adverse effect on the yield. Therefore, a solution for this problem is urgently required.

As another problem of the related-art method, it is impossible to provide multi-blend curvatures for a substrate.

In addition, although a 3D cover glass having a curvature or a bend on at least one edge is formed by a variety of processes, the quality problem of the outer appearance and shape after the forming process has not been overcome yet.

The related-art method can only form products having a simple shape without obtaining a shape having a large curvature or precisely reproducing the dimensions of products. This problem cannot satisfy a trend towards the diversification of design.

In addition, the part of the substrate S that will form the effective area may not be perfectly formed, which depends on how the size, number, or the like of the vacuum holes 101 is, thereby causing the problem that the substrate S has an uneven part When the 3D cover glass has a non-formed part or an uneven part, the 3D cover glass cannot be assembled into a display device. Even if this 3D cover glass is assembled into a display device, it causes localized differences in light refractivity and brightness. This consequently decreases the performance of the display device, thereby causing the problem of lowered market competitiveness. Vacuum forming methods and apparatuses are for example described in WO 2012/118612 A1, US 2014/0234581 A1, JP 61-222933, KR 10-2014-0111403, US 3,825,742 and WO 2015/095093 A1.

The information disclosed in the Background section is only provided for better understanding of the background and should not be taken as an acknowledgment or any form of suggestion that this information forms prior art that would already be known to a person skilled in the art.

### BRIEF SUMMARY

Various aspects of the present disclosure provide a vacuum forming mold for substrates without a vacuum hole in a product forming area thereof.

Also provided is a vacuum forming mold for substrates, able to remove hole marks that would otherwise be created on a substrate (during hot forming).

Also provided is a vacuum forming mold for substrates, able to form a curvature or multi-blend curvature shape without difficulties.

Also provided is a vacuum forming mold for substrates, able to provide a uniform surface condition to a substrate.

According to an aspect, a vacuum forming mold for substrates includes: a cavity and a vacuum suction opening communicating with the cavity. The vacuum suction opening is provided in a sidewall surface of the cavity, so that when a substrate is placed in the cavity, air inside the cavity below a substrate can be sucked out through the sidewall surface.

According to another aspect, a vacuum forming method for substrates includes: seating a substrate on a vacuum forming mold, wherein the vacuum forming mold comprises a cavity and a vacuum suction opening communicating with the cavity, the vacuum suction opening being provided in a sidewall surface of the cavity; and sucking out air inside the cavity below the substrate by the vacuum suction opening, such that the air is sucked out through the sidewall surface.

As set forth above, a substrate is imparted with a three-dimensional (3D) shape in a vacuum forming process using a mold having a vacuum suction opening located in a horizontal direction with respect to the substrate instead of a related-art mold in which a vacuum hole is located in a vertical direction with respect to the substrate. Accordingly, the mold does not have a vacuum hole in a product forming area thereof.

Since it is not required to machine a plurality of holes or slots when fabricating the mold, it is possible to reduce fabrication costs.

In addition, it is possible to remove hole marks that would otherwise be created on the surface of a product in a vacuum forming process. Since air is sucked out through the sidewall surface of the mold, the vacuum forming process does not leave a hole mark or a slot mark on the surface of a substrate. Since no mark, such as a hole mark or a slot mark, is left on the surface of the substrate, it is possible to remove post processing steps such as polishing, thereby reducing fabrication costs.

Furthermore, hot vacuum forming that does not cause display distortion can be realized.

The methods and apparatuses of the present disclosure have other features and advantages that will be apparent from or are set forth in greater detail in the accompanying drawings which are incorporated herein, and in the following Detailed Description, which together serve to explain certain principles of the present disclosure.

### BRIEF DESCRIPTION OF THE DRAWINGS

FIG. 1 and FIG. 2 schematically illustrate a vacuum forming method for substrates of the related art;
FIG. 3 to FIG. 5 schematically illustrate a vacuum forming mold for substrates according to a first exemplary embodiment ;
FIG. 6 schematically illustrates a vacuum forming mold for substrates according to a second exemplary embodiment; and
FIG. 7 and FIG. 8 comparatively illustrate the quality of a substrate formed using a vacuum forming mold of the related art (parts (a) of FIG. 7 and FIG. 8) and the quality of a substrate formed using a vacuum forming mold of the present disclosure (parts (b) of FIG. 7 and FIG. 8).

### DETAILED DESCRIPTION

Reference will now be made in detail to embodiments of the present disclosure, examples of which are illustrated in the accompanying drawings and described below, so that a person skilled in the art to which the present disclosure relates could easily put the present disclosure into practice.

Throughout this document, reference should be made to the drawings, in which the same reference numerals and symbols will be used throughout the different drawings to designate the same or like components. In the following description, detailed descriptions of known functions and components incorporated herein will be omitted in the case that the subject matter of the present disclosure is rendered unclear.

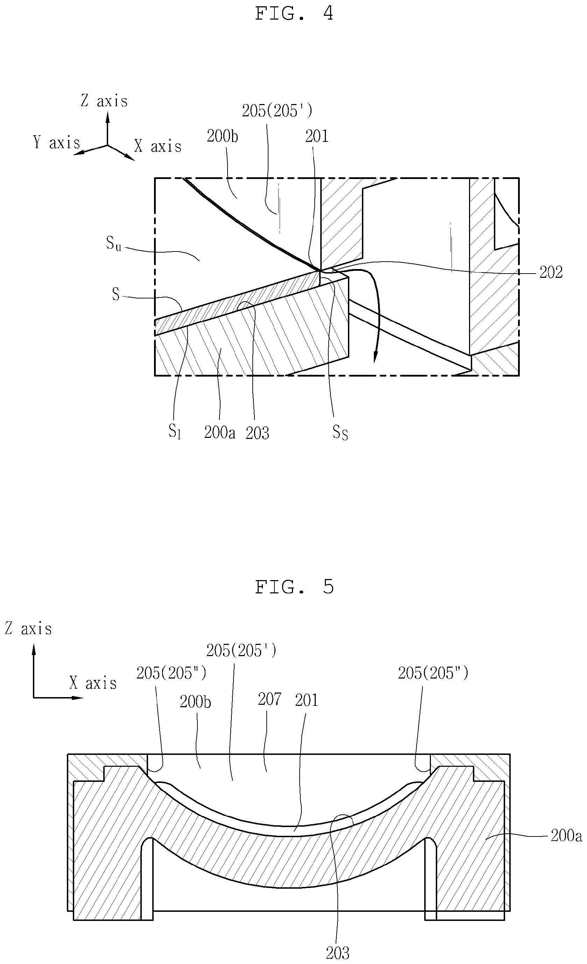

FIG. 3 to FIG. 5 schematically illustrate a vacuum forming method 200 for substrates according to a first exemplary embodiment.

The mold 200 of the present embodiment is used for vacuum-forming a substrate S. The substrate S is typically a glass substrate. However, this is not intended to be limiting, and any substrate can be used as long as the substrate can be vacuum-formed. The glass substrate according to the present embodiment may be a cover glass in use, in particular, for a display panel of a wearable device having a flexible display or a mobile device.

The substrate S is softened by heating the mold 200 and the substrate S to a predetermined temperature. Afterwards, when a vacuum pressure is applied to a cavity 207 using a vacuum line of vacuum equipment, the softened substrate S is brought into close contact with the bottom surface 203 of the cavity 207, such that the shape of the bottom surface 203 of the cavity 207 is transferred to the substrate S.

A pneumatic pressure, if necessary, may be applied to the top surface Su of the substrate S in order to assist in the forming of the substrate S. The pneumatic pressure must be applied uniformly all over the entire top surface Su of the substrate S. It is not preferable that a plurality of air holes (not shown) be disposed right above the substrate S such that a pneumatic pressure is applied to localized parts of the top surface Su of the substrate S corresponding to the air holes.

The mold 200 according to the present embodiment is depicted as having two split bodies, i.e. a mold base 200a and a housing 200b. However, this is not intended to be limiting, and the mold 200 may have a multi-split structure that is divided into more parts or may have a single-body structure only.

The mold 200 includes a cavity 207 and a vacuum suction opening 201.

The cavity 207 is defined by sidewall surfaces 205 and the bottom surface 203. Herein, the sidewall surfaces 205 refer to the surfaces that will or may contact side surfaces Ss of the substrate S during the forming process, in particular, at a point of the completion of the forming process. It should not be understood that the side surfaces 205 are necessarily vertical surfaces. That is, the sidewall surfaces 205 may or not be vertical surfaces. Likewise, the bottom surface 203 refers to the surface that will or may contact the bottom surface Sl of the substrate S during the forming process, in particular, at a point of the completion of the forming process. It should not be understood that the bottom surface Sl is necessarily a horizontal surface. That is, the bottom surface may or not be a horizontal surface.

Herein, the terms related to directions, such as the upper part, the lower part, the top surface Su, the bottom surface Sl, the side surfaces Ss, the bottom surface 203, the sidewall surfaces 205, horizontal, and vertical, are used to indicate relative directions for the sake of explanation. It should not be understood that these terms indicate absolute directions.

The vacuum suction opening 201 is configured to communicate with the cavity 207. The vacuum suction opening 201 is provided in at least one of the sidewall surfaces 205. However, it should not be understood that a vacuum path 202 extends horizontally from the vacuum suction opening 201. Although the vacuum path 202 may extend horizontally, a variety of other embodiments is possible. That is, the vacuum path 202 may extend at a downward incline or an upward incline. Even in this case, the vacuum suction opening 201, which is the distal end of the vacuum path 202, must be open on the corresponding sidewall surface 205. Air inside the cavity 207 below the substrate S is sucked out by the vacuum suction opening 201. Therefore, the air inside the cavity 207 is sucked out through the sidewall surface 205 instead of the bottom surface 203, thereby leaving no vacuum hole mark on the bottom surface Sl of the substrate S that is in contact with or may come into contact with the bottom surface 203. From this, it can be clearly understood that the present disclosure is significantly different from the related art in which the air is sucked out through the bottom surface 203.

The vacuum suction opening 201 is provided in the part of the sidewall surface 205 adjoining the bottom surface 203 of the cavity 207. It is preferable that the vacuum suction opening 201 be provided in the lowermost part of the sidewall surface 205.

It is preferable that the vacuum suction opening 201 be configured such that the vacuum suction opening 201 is closed by the corresponding side surface Ss of the substrate S when the forming process of the substrate S is completed. The side surface Ss of the formed substrate S can close the vacuum suction opening 201 by being in contact with the part of the sidewall surface 205 surrounding the vacuum suction opening 201. For this, it is preferable that the vertical dimension of the gap of the vacuum suction opening 201 be smaller than the thickness of the sidewall Ss of the substrate S. In addition, it is preferable that the length of the vacuum suction opening 201 be smaller than the length of the side surface Ss of the substrate S and/or the curved length of the side surface Ss of the formed substrate S.

In the mold illustrated in FIG. 3 to FIG. 5, the bottom surface 203 of the cavity 207 is concave in a first direction (X axis direction), and is linear in a second direction (Y axis direction) perpendicular to the first direction. The sidewall surfaces 205 include first sidewall surfaces 205' extending in the first direction and second sidewall surfaces 205" extending in the second direction. The vacuum suction opening 201 is formed on the part of the first sidewall surfaces 205' adjoining the bottom surface 203. The vacuum suction opening 201 may be formed on each of the two first sidewall surfaces 205' facing each other, or may be formed on one first sidewall surface 205' only.

A single vacuum suction opening 201 or a plurality of vacuum suction openings 201 may be provided. The vacuum suction opening 201 may have a variety of shapes, such as a slit, a hole, or the like. In FIG. 3 to FIG. 5, the vacuum suction opening 201 is illustrated as being slit-shaped.

The substrate S is seated on the vacuum forming mold 200 for substrates, and air inside the cavity 207 below the substrate S (i.e. air inside the space defined by the substrate S, the sidewall surfaces 205, and the bottom surface 203) is sucked out by the vacuum suction opening 201. Therefore, the air inside the cavity 207 below the substrate S is sucked out through the corresponding sidewall surface 205, whereby the substrate S is vacuum-formed.

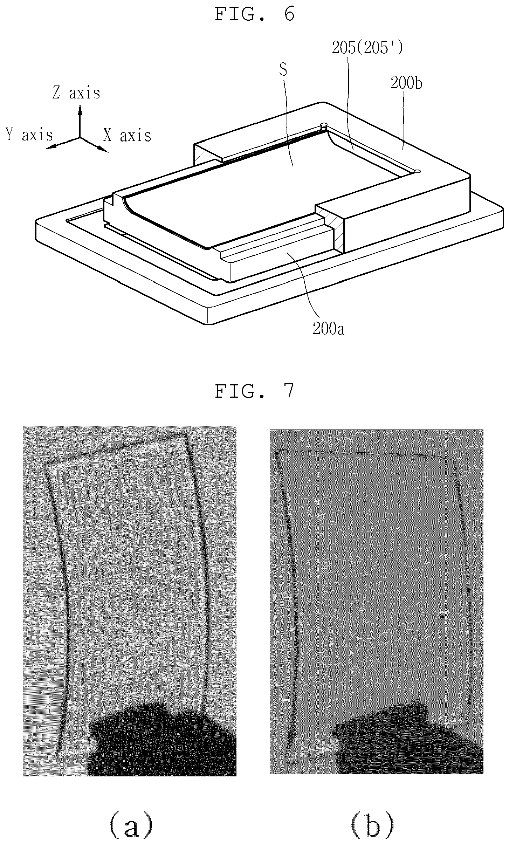

FIG. 6 schematically illustrates a vacuum forming method 200 for substrates according to a second exemplary embodiment.

The substrate S formed according to the first embodiment has an overall negative curvature in the first direction. According to the second embodiment, the substrate S has a negative curvature along the X axis direction at the edges extending in the Y axis direction, and the part of the substrate S between the two edges is formed flat. In this manner, the present disclosure allows the substrate S to be formed in a variety of shapes.

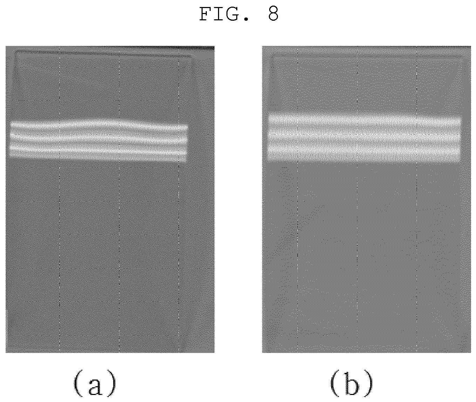

FIG. 7 and FIG. 8 comparatively illustrate the quality of a substrate formed using a vacuum forming method of the related art (parts (a) of FIG. 7 and FIG. 8) and the quality of a substrate formed using a vacuum forming method of the present disclosure (parts (b) of FIG. 7 and FIG. 8).

Both the dimensions quality of the formed substrates comparatively illustrated in FIG. 7 and FIG. 8 had a ±0.02 mm contour.

FIG. 7 illustrates surface qualities. As illustrated in part (a) of FIG. 7, the substrate S formed by the related-art method has vacuum hole marks on the surface thereof transferred from the mold. In contrast, as illustrated in part (b) of FIG. 7, the substrate S formed by the method of the present disclosure had no vacuum hole marks on the surface thereof.

FIG. 8 illustrates display distortion. As illustrated in part (a) of FIG. 8, the substrate S formed by the related-art method had irregularity of the surface which caused display distortion. In contrast, the substrate S formed by the method of the present disclosure caused no display distortion.

As proven by experimental data, the substrate S formed by the method of the present disclosure has perfect product quality. For example, the surface quality is improved, and the of the display distortion is removed. In addition, dimensions can be perfectly reproduced.

The present disclosure removes degradation factors, such as the holes in the surface of the mold 200, that have bad effects on the quality of a product. A vacuum chamber is formed by the mold base 200a, and the vacuum suction opening 201 is located in a horizontal direction with respect to a product instead of being located in a vertical direction with respect to the substrate S. The vacuum chamber and the vacuum suction opening 201 provided in this manner can instantaneously increase the degree of vacuum. This can consequently prevent creation of a mark on the surface of the product.

In order to prevent a vacuum leak, the vertical dimension of the gap of the vacuum suction opening 201 is determined to be smaller than the thickness of the substrate S. The removal of the surface marks and the optimization of the vacuum pressure not only realize more precise dimensions of products, but also produce superior surface quality that does not cause display distortion. According to the present disclosure, the vacuum suction opening 201 can have a variety of shapes according to the shapes of products as required. It is possible to form a product with multi-blend curvatures and a product having a large curvature.

As set forth above, the present disclosure is suitable for forming a cover glass having a 3D shape of a wearable device having a flexible display or a mobile device, and is applicable for mass production of substrates.

The foregoing descriptions of specific exemplary embodiments of the present disclosure have been presented with respect to the drawings. They are not intended to be exhaustive or to limit the present disclosure to the precise forms disclosed, and obviously many modifications and variations are possible for a person having ordinary skill in the art in light of the above teachings.

It is intended therefore that the scope of the present disclosure not be limited to the foregoing embodiments, but be defined by the Claims appended hereto

## Claims

1. A vacuum forming mold for substrates comprising:
a cavity (207); and
a vacuum suction opening (201) communicating with the cavity (207),
wherein the vacuum suction opening (201) is provided in a sidewall surface (205) of the cavity (207), so that when a substrate is placed in the cavity (207) air inside the cavity (207) below a substrate can be sucked out through the sidewall surface (205); and
wherein the expression "sidewall surface" refers to a surface that contacts the side surfaces of a substrate that is placed into the cavity (207) during the forming process.

2. The mold according to claim 1, wherein the vacuum suction opening (201) is provided in a part of the sidewall surface (205) adjoining a bottom surface (203) of the cavity (207) .

3. The mold according to claim 1, wherein the vacuum suction opening (201) is provided in a lowermost part of the sidewall surface (205).

4. The mold according to claim 1, wherein the vacuum suction opening (201) is located such that the vacuum suction opening (201) is closed by a side surface of the substrate that has been formed.

5. The mold according to claim 4, wherein the side surface of the substrate that has been formed closes the vacuum suction opening (201) while being in contact with a part of the sidewall surrounding the vacuum suction opening (201).

6. The mold according to claim 1, wherein a vertical dimension of a gap of the vacuum suction opening (201) is smaller than a thickness of a corresponding side surface of the substrate.

7. The mold according to claim 1, wherein a length of the vacuum suction opening (201) is smaller than a length of a corresponding side surface of the substrate.

8. The mold according to claim 1, wherein
a bottom surface (203) of the cavity (207) is concave in a first direction and is flat in a second direction perpendicular to the first direction,
the sidewall surface (205) of the cavity (207) comprises a first sidewall surface (205) extending in the first direction and a second sidewall surface (205) extending in the second direction, and
the vacuum suction opening (201) is provided in a part of the first sidewall surface (205) adjoining the bottom surface (203) .

9. The mold according to claim 1, wherein the vacuum suction opening (201) comprises at least one vacuum suction opening (201).

10. The mold according to claim 1, wherein the vacuum suction opening (201) comprises at least one of a slit and a hole.

11. A vacuum forming method for substrates comprising:
seating a substrate on a vacuum forming mold, wherein the vacuum forming mold comprises a cavity (207) and a vacuum suction opening (201) communicating with the cavity (207), the vacuum suction opening (201) being provided in a sidewall surface (205) of the cavity (207); and
sucking out air inside the cavity (207) below the substrate by the vacuum suction opening (201), such that the air is sucked out through the sidewall surface (205),
wherein the expression "sidewall surface" refers to a surface that contacts the side surfaces of a substrate that is placed into the cavity (207) during the forming process.

12. The method according to claim 11, wherein the vacuum suction opening (201) is located such that the vacuum suction opening (201) is closed by a side surface of the substrate that has been formed.

13. The method according to claim 12, wherein the side surface of the substrate that has been formed closes the vacuum suction opening (201) while being in contact with a part of the sidewall surrounding the vacuum suction opening (201).

14. The method according to claim 11, wherein the substrate is glass.

## Patentansprüche

1. Form zum Vakuumformen für Substrate, umfassend:
ein Hohlraum (207); und
eine Vakuumansaugöffnung (201), die mit dem Hohlraum (207) in Verbindung steht, wobei die Vakuumansaugöffnung (201) in einer Seitenwandfläche (205) des Hohlraums (207) bereitgestellt ist, so dass, wenn ein Substrat in dem Hohlraum (207) platziert wird, Luft innerhalb des Hohlraums (207) unter einem Substrat durch die Seitenwandfläche (205) abgesaugt werden kann; und
wobei sich der Ausdruck "Seitenwandfläche" auf eine Oberfläche bezieht, die die Seitenflächen eines Substrats berührt, das während des Formprozesses in den Hohlraum (207) eingebracht wird.

2. Form nach Anspruch 1, wobei die Vakuumansaugöffnung (201) in einem Teil der Seitenwandfläche (205) bereitgestellt ist, der an eine Bodenfläche (203) des Hohlraums (207) angrenzt.

3. Form nach Anspruch 1, wobei die Vakuumansaugöffnung (201) in einem untersten Teil der Seitenwandfläche (205) bereitgestellt ist.

4. Form nach Anspruch 1, wobei die Vakuumansaugöffnung (201) so angeordnet ist, dass die Vakuumansaugöffnung (201) durch eine Seitenfläche des Substrats geschlossen ist, das geformt worden ist.

5. Form nach Anspruch 4, wobei die Seitenfläche des Substrats, das geformt worden ist, die Vakuumansaugöffnung (201) schließt, während sie mit einem Teil der Seitenwand in Berührung steht, der die Vakuumansaugöffnung (201) umgibt.

6. Form nach Anspruch 1, wobei eine vertikale Abmessung eines Spaltes der Vakuumansaugöffnung (201) kleiner ist als eine Dicke einer entsprechenden Seitenfläche des Substrats.

7. Form nach Anspruch 1, wobei eine Länge der Vakuumansaugöffnung (201) kleiner ist als eine Länge einer entsprechenden Seitenfläche des Substrats.

8. Form nach Anspruch 1, wobei eine Bodenfläche (203) des Hohlraums (207) in einer ersten Richtung konkav ist und in einer zweiten Richtung, die senkrecht zur ersten Richtung ist, flach ist, die Seitenwandfläche (205) des Hohlraums (207) eine erste Seitenwandfläche (205), die sich in der ersten Richtung erstreckt, und eine zweite Seitenwandfläche (205), die sich in der zweiten Richtung erstreckt, umfasst und die Vakuumansaugöffnung (201) in einem Teil der ersten Seitenwandfläche (205) bereitgestellt ist, der an der Bodenfläche (203) angrenzt.

9. Form nach Anspruch 1, wobei die Vakuumansaugöffnung (201) mindestens eine Vakuumansaugöffnung (201) umfasst.

10. Form nach Anspruch 1, wobei die Vakuumansaugöffnung (201) mindestens einen von einem Schlitz und einem Loch umfasst.

11. Vakuumformverfahren für Substrate, umfassend:
Aufsetzen eines Substrats auf eine Form zum Vakuumformen, wobei die Form zum Vakuumformen einen Hohlraum (207) und eine Vakuumansaugöffnung (201) umfasst, die mit dem Hohlraum (207) in Verbindung steht, wobei die Vakuumansaugöffnung (201) in einer Seitenwandfläche (205) des Hohlraums (207) bereitgestellt ist; und
Absaugen von Luft innerhalb des Hohlraums (207) unter dem Substrat durch die Vakuumansaugöffnung (201), so dass die Luft durch die Seitenwandfläche (205) abgesaugt wird, wobei sich der Ausdruck "Seitenwandfläche" auf eine Oberfläche bezieht, die die Seitenflächen eines Substrats berührt, das während des Formprozesses in den Hohlraum (207) eingebracht wird.

12. Verfahren nach Anspruch 11, wobei die Vakuumansaugöffnung (201) so angeordnet ist, dass die Vakuumansaugöffnung (201) durch eine Seitenfläche des Substrats geschlossen ist, das geformt worden ist.

13. Verfahren nach Anspruch 12, wobei die Seitenfläche des Substrats, das geformt worden ist, die Vakuumansaugöffnung (201) schließt, während sie mit einem Teil der Seitenwand in Berührung steht, der die Vakuumansaugöffnung (201) umgibt.

14. Verfahren nach Anspruch 11, wobei das Substrat Glas ist.

## Revendications

1. Moule de formage sous vide destiné aux substrats comprenant :
une cavité (207) ; et
une ouverture d'aspiration sous vide (201) communiquant avec la cavité (207), ladite ouverture d'aspiration sous vide (201) étant ménagée dans une surface de paroi latérale (205) de la cavité (207), afin que lorsqu'un substrat est placé dans la cavité (207), l'air à l'intérieur de la cavité (207) sous un substrat puisse être aspiré à travers la surface de paroi latérale (205) ; et
ladite expression "surface de paroi latérale" faisant référence à une surface qui entre en contact avec les surfaces latérales d'un substrat qui est placé dans la cavité (207) durant le processus de formage.

2. Moule selon la revendication 1, ladite ouverture d'aspiration sous vide (201) étant ménagée dans une partie de la surface de paroi latérale (205) attenante à une surface inférieure (203) de la cavité (207).

3. Moule selon la revendication 1, ladite ouverture d'aspiration sous vide (201) étant ménagée dans la partie la plus basse de la surface de paroi latérale (205).

4. Moule selon la revendication 1, ladite ouverture d'aspiration sous vide (201) étant située de sorte que l'ouverture d'aspiration sous vide (201) soit fermée par une surface latérale du substrat qui a été formée.

5. Moule selon la revendication 4, ladite surface latérale du substrat qui a été formée fermant l'ouverture d'aspiration sous vide (201) tout en étant en contact avec une partie de la paroi latérale entourant l'ouverture d'aspiration sous vide (201).

6. Moule selon la revendication 1, une dimension verticale d'un espace de l'ouverture d'aspiration sous vide (201) étant inférieure à une épaisseur d'une surface latérale correspondante du substrat.

7. Moule selon la revendication 1, une longueur de l'ouverture d'aspiration sous vide (201) étant inférieure à une longueur d'une surface latérale correspondante du substrat.

8. Moule selon la revendication 1, une surface inférieure (203) de la cavité (207) étant concave dans une première direction et étant plate dans une seconde direction perpendiculaire à la première direction, ladite surface de paroi latérale (205) de la cavité (207) comprenant une première surface de paroi latérale (205) s'étendant dans la première direction et une seconde surface de paroi latérale (205) s'étendant dans la seconde direction, et ladite ouverture d'aspiration sous vide (201) étant ménagée dans une partie de la première surface de paroi latérale (205) attenante à la surface inférieure (203).

9. Moule selon la revendication 1, ladite ouverture d'aspiration sous vide (201) comprenant au moins une ouverture d'aspiration sous vide (201).

10. Moule selon la revendication 1, ladite ouverture d'aspiration sous vide (201) comprenant au moins l'un d'une fente et d'un trou.

11. Procédé de formage sous vide destiné aux substrats comprenant :
mise en place d'un substrat sur un moule de formage sous vide, ledit moule de formage sous vide comprenant une cavité (207) et une ouverture d'aspiration sous vide (201) communiquant avec la cavité (207), l'ouverture d'aspiration sous vide (201) étant ménagée dans une surface de paroi latérale (205) de la cavité (207) ; et
l'aspiration de l'air à l'intérieur de la cavité (207) sous le substrat par l'ouverture d'aspiration sous vide (201), de sorte que l'air soit aspiré à travers la surface de paroi latérale (205), ladite expression "surface de paroi latérale" référant à une surface qui entre en contact avec les surfaces latérales d'un substrat qui est placé dans la cavité (207) durant le processus de formage.

12. Procédé selon la revendication 11, ladite ouverture d'aspiration sous vide (201) étant située de sorte que l'ouverture d'aspiration sous vide (201) soit fermée par une surface latérale du substrat qui a été formée.

13. Procédé selon la revendication 12, ladite surface latérale du substrat qui a été formée fermant l'ouverture d'aspiration sous vide (201) tout en étant en contact avec une partie de la paroi latérale entourant l'ouverture d'aspiration sous vide (201).

14. Procédé selon la revendication 11, ledit substrat étant du verre.
